(19) Europäisches Patentamt / European Patent Office / Office européen des brevets

(11) **EP 1 283 644 B1**

(12) **FASCICULE DE BREVET EUROPEEN**

(45) Date de publication et mention
de la délivrance du brevet:
**11.11.2009 Bulletin 2009/46**

(51) Int Cl.:
***H04W 16/18*** *(2009.01)*

(21) Numéro de dépôt: **02291976.5**

(22) Date de dépôt: **06.08.2002**

(54) **Procédé d'établissement d'une carte de couverture radio**

Verfahren zur Erstellung einer Funkbedeckungskarte

Method for determining a radio coverage map

(84) Etats contractants désignés:
**AT BE BG CH CY CZ DE DK EE ES FI FR GB GR IE IT LI LU MC NL PT SE SK TR**

(30) Priorité: **10.08.2001 FR 0110724**

(43) Date de publication de la demande:
**12.02.2003 Bulletin 2003/07**

(73) Titulaire: **Société Française du Radiotéléphone-SFR**
**75008 Paris (FR)**

(72) Inventeur: **Fattouch, Imad**
**75013 Paris (FR)**

(74) Mandataire: **Debay, Yves**
**Cabinet Debay**
**126 Elysée 2**
**78170 La Celle Saint Cloud (FR)**

(56) Documents cités:
**EP-A- 1 098 546     WO-A-01/06349**
**WO-A-99/30522     US-A- 5 987 328**
**US-A- 6 097 956**

## Description

La présente invention concerne les réseaux de radiotéléphonie cellulaire, et plus particulièrement, lors de la définition d'un réseau prévu par un opérateur, l'estimation prévisionnelle de la couverture radio de chacune des cellules, c'est-à-dire l'efficacité de l'offre de service de communication pour les terminaux mobiles.

Une telle estimation est généralement connue du document WO-A-01/06349.

Un réseau de radiotéléphonie cellulaire est constitué d'une pluralité de stations radio terrestres de base qui assurent la couverture radio de zones définissant des cellules respectives. Pour pouvoir établir les communications entre les terminaux radio mobiles d'une cellule et la station, les circuits récepteurs de ceux-ci doivent recevoir les signaux au-dessus de leur seuil de sensibilité.

Le bruit électronique des composants des circuits récepteurs s'ajoute au bruit de propagation radio et peut rendre inutilisable la liaison, par exemple, dans une liaison numérique, en provoquant une détection erronée de certains des bits transmis. Quel que soit le type de modulation utilisé, le risque d'erreur de détection des bits croît rapidement dès que le niveau de signal utile reçu, donc le rapport signal à bruit, descend à une valeur de seuil n'offrant qu'une marge de sécurité minimale contre les impulsions de bruit.

Un codage d'émission de paquets de bits de données avec redondance, par code autocorrecteur, permet bien au récepteur de détecter des erreurs et de les corriger si leur nombre est limité. Cela permet de tolérer une baisse supplémentaire limitée du niveau de réception, mais, au-delà, le nombre d'erreurs excessif empêche toute correction. Même si la liaison logique avec la station peut initialement être établie et maintenue par des signaux de service, pour réserver une voie de transmission utile, le taux excessif de bits utiles erronés rend inutilisable cette dernière, pour la voix numérisée et pour les données autres.

D'une façon générale, il faut donc prévoir, pour les stations et les terminaux, des circuits récepteurs à haute sensibilité, c'est-à-dire à seuil de détection relativement bas, et des circuits émetteurs puissants.

En réception, les composants des circuits utilisés sont sélectionnés pour ne présenter qu'un faible niveau de bruit intrinsèque. On peut donc fortement amplifier le signal utile reçu, jusqu'à ce que le niveau de bruit intrinsèque, amplifié avec le signal utile, commence à devenir un perturbateur. Le seuil de sensibilité du récepteur est alors atteint. Les distorsions de propagation radio constituent aussi une cause d'erreur, limitant les possibilités de détection des signaux faibles.

En émission, la puissance des stations doit rester limitée, pour éviter les perturbations entre cellules ou autres systèmes radio. La puissance d'émission des terminaux doit de même rester limitée, pour préserver l'autonomie de leur batterie et pour garantir la santé des utilisateurs.

L'opérateur ne peut donc pas garantir que tous les terminaux d'une cellule vont recevoir un signal d'un niveau au moins égal au seuil de sensibilité pour assurer une liaison de radio, en particulier compte tenu des obstacles radio, tels que murs d'un appartement ou carrosserie d'une voiture transportant l'utilisateur. Il en est de même dans le sens montant, vers la station.

En pratique, comme le niveau de champ radio décroît avec la distance selon une loi d'atténuation connue, la taille ou "rayon" des cellules est limité à la distance pour laquelle le niveau de champ est descendu sensiblement au seuil de sensibilité des terminaux, avec toutefois une marge déterminée de sécurité pour tenir compte des obstacles temporaires dans la propagation radio, provoquant un évanouissement du signal.

L'opérateur du réseau prend aussi en compte les reliefs de la cellule et la nature du sursol, immeubles, forêts et autres, pour corriger les calculs de niveau de champ effectués d'après la loi d'atténuation. En fonction de ces calculs, il détermine ainsi des zones masquées dans la cellule, c'est-à-dire des zones dans lesquelles le niveau de réception des signaux de la station est inférieur au seuil de sensibilité des récepteurs.

En d'autres termes, et si chaque cellule est divisée en un maillage d'une pluralité de pixels représentant chacun une surface de quelques dizaines ou centaines de mètres carrés, la carte de couverture radio est constituée d'une mosaïque de pixels "noirs" ou "blancs" selon que le champ de la station y est respectivement supérieur ou inférieur au seuil de bon fonctionnement des terminaux. Le problème de liaison montante vers la station est moins critique car celle-ci est équilibrée par le paramétrage des conditions d'émission et la conception du réseau avec la liaison descendante.

La demanderesse s'est posé le problème de la validité d'une telle approche binaire pour représenter, comme évoqué ci-dessus, ou autrement, la carte de couverture relative au service radiotéléphonique.

Elle a alors observé que le mode ci-dessus de détermination de l'existence de la couverture radio ne prenait pas en compte les aspects dynamiques de la propagation radio, c'est-à-dire l'évolution de celle-ci au cours du temps, et donc les alternances de possibilité de liaison radio et d'impossibilité dans la zone de chaque pixel, en fonction des fluctuations du niveau reçu autour du seuil de sensibilité des récepteurs.

La présente invention vise ainsi à proposer un procédé de détermination de la carte de couverture radio d'une cellule qui traduise mieux la réalité.

A cet effet, l'invention concerne un procédé d'établissement d'une carte de couverture radio d'au moins une cellule d'un réseau de radiotéléphonie cellulaire, au moyen d'un système de calcul disposant de données préalablement mémorisées de carte géographique comportant la position de la cellule et d'une station radio de base associée, disposant de données préalablement mémorisées spécifiant un niveau d'émission de la station et un niveau de seuil de sensibilité de réception radio de terminaux de la cellule, et disposant de données préalablement mémorisées d'une loi d'atténuation de propagation radio, procédé dans lequel :

- le système de calcul effectue, à partir des données de carte, un maillage de la carte de la cellule en une pluralité déterminée de pixels de la carte occupant des positions dont il mémorise des données représentatives,
- il calcule, par comparaison entre les données de carte, spécifiant la position de la station, et les données de position de chaque pixel et d'après la loi d'atténuation, une pluralité d'atténuations de propagation radio du niveau d'émission de la station pour les pixels respectifs d'où il déduit, à partir du niveau d'émission de la station, une pluralité de niveaux moyens de réception, associés aux pixels respectifs, qu'il mémorise.
- il compare la pluralité de niveaux moyens de réception mémorisés au seuil de sensibilité pour déterminer une pluralité de sens d'inégalité entre la valeur du seuil et la valeur du niveau moyen de réception associé à chaque pixel, et en déduire la carte de couverture radio de la cellule,

- des données représentant une loi de fluctuation temporelle de l'atténuation de propagation radio ayant été préalablement mémorisées et rendues accessibles au système de calcul, ce dernier applique la loi de fluctuation à la pluralité de niveaux moyens de réception,
- il en détermine une pluralité correspondante de probabilités pour que lesdites inégalités respectives aient un sens déterminé, et
- il établit la carte de couverture radio en associant, à chaque pixel, des données représentant ladite probabilité.

Ainsi, et pour reprendre la formulation imagée des pixels noirs et blancs de l'art antérieur, l'invention propose des pixels à différents niveaux de gris, c'est-à-dire une approche dynamique, qui fait disparaître les distorsions qui existaient entre la réalité et l'estimation binaire, statique, de la couverture.

Un pixel dont le niveau "statique" ou "moyen" de réception, calculé d'après la loi de propagation, est inférieur au seuil de sensibilité sera ainsi associé à une probabilité de possibilité de liaison, ou taux local de couverture, compris entre 0 et 50 %, ce dernier cas correspondant sensiblement au seuil. Un pixel blanc de l'art antérieur devient ainsi gris clair. Inversement, un pixel noir devient gris foncé, puisqu'il existe une probabilité de 0 à 50 % pour que le niveau de réception correspondant passe temporairement sous le seuil.

La couverture radio de chaque pixel, établie par la probabilité de dépassement ou non du seuil, fonction de la loi d'atténuation et de la loi de fluctuation du niveau de réception, traduit ainsi avec une bonne précision l'influence des phénomènes affectant la propagation radio.

L'inégalité considérée, et la probabilité associée, peut indiquer que le niveau reçu dépasse le seuil, et alors elle exprime le fait qu'il y a couverture radio, ou bien elle traite le cas opposé, en indiquant une non-couverture radio. Les deux cas correspondent donc à des calculs se référant à des axes de pourcentages de couverture ou non-couverture de directions opposées, la couverture radio étant, dans les deux cas, parfaitement exprimée, directement par sa valeur ou bien son complément. Le cas de la parfaite égalité des niveaux comparés est un cas particulier sans signification particulière, qui peut être assimilé à l'un ou bien l'autre des cas d'inégalité.

On conçoit que le procédé de l'invention peut s'appliquer à plusieurs cellules et, globalement, à toute région géographique ou administrative.

De préférence, au moins une autre cellule radio, avec une autre station de base, occupant une position lui permettant de recouvrir une zone de bord de la cellule considérée, le système de calcul détermine aussi la carte de couverture de l'autre cellule et il affecte, aux pixels de la zone de bord, une probabilité composite d'inégalité représentant la composition de la probabilité associée à l'émission de la station de la cellule considérée et une probabilité homologue associée à l'émission de l'autre station.

Ainsi, la modélisation du réseau est améliorée par prise en compte d'un effet d'entraide entre cellules, si bien que le niveau estimé de couverture moyen des cellules est accru. Comme le niveau d'émission de la station est en pratique déterminé par la distance aux zones de bord, le fait d'accroître, par composition, leur probabilité de couverture évite ainsi la nécessité de remonter le niveau d'émission de la station, qui ne présente par ailleurs aucun intérêt pour les zones proches de la station. On peut donc, le cas échéant, réduire le niveau prévu d'émission de la station, et donc les perturbations vers les autres cellules, si la valeur globale visée de couverture radio de la cellule est alors dépassée, ou bien augmenter la taille de la cellule.

Avantageusement, la carte comportant des données de densité de population, le système de calcul en détermine la densité de population de chaque pixel et il la pondère par la probabilité associée à chaque pixel.

Ainsi, la carte de couverture traduit une réalité fonctionnelle et commerciale, c'est-à-dire l'estimation du pourcentage de clientèle disposant du service radio à un instant déterminé, ou encore le taux de disponibilité fonctionnelle des terminaux. On aura toutefois compris qu'il s'agit de probabilités moyennes s'appliquant à l'ensemble de la population de terminaux, et que la probabilité de disponibilité d'un terminal déterminé dépend de sa position dans la cellule, et en particulier est a priori plus faible au bord de celle-ci.

Dans un but de vérification d'un cahier des charges, par exemple, le système de calcul peut calculer la somme des probabilités de la pluralité de pixels pour déterminer un taux moyen de couverture radio de la cellule. Le calcul peut porter sur la carte de couverture purement géographique ou sur la carte de couverture de population, donc sur les probabilités pondérées.

L'invention sera mieux comprise à l'aide de la description suivante d'un mode préféré de mise en oeuvre du procédé de l'invention en vue de définir les cellules d'un réseau de radiotéléphonie cellulaire, en référence aux dessins annexés, dans lesquels :

- la figure 1 représente schématiquement une carte géographique portant une partie d'un réseau de radiotéléphonie cellulaire en cours d'élaboration,
- la figure 2 représente une gaussienne illustrant une loi de variation du niveau d'un signal radio reçu,
- la figure 3 représente des fluctuations de signal reçu illustrant la gaussienne de la figure 2, et
- la figure 4 illustre la pondération de la carte de couverture géographique par une carte de densité de population.

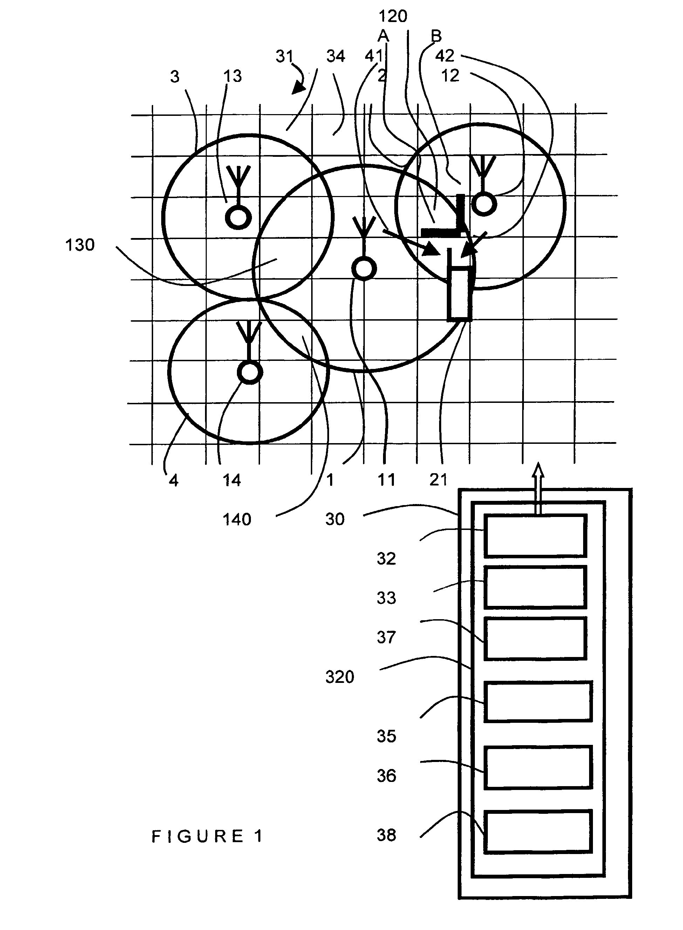

La figure 1 représente, sur un dispositif d'affichage d'un système de calcul 30, une carte 31 d'une zone géographique d'un réseau de radiotéléphonie cellulaire en cours de définition, sur laquelle ont été reportées les positions prévues de quatre cellules radio, respectivement référencées 1, 2, 3 et 4, entourant des stations de base respectives 11, 12, 13 et 14 de positions indiquées. Comme représenté, les cellules 1 à 4 débordent les unes sur les autres, la cellule 1 ayant des zones de bord 120, 130 et 140 respectivement communes avec les cellules 2, 3 et 4. Comme on le comprendra, le recouvrement entre cellules 1 à 4 n'est qu'un cas particulier dans le cadre de l'invention.

La carte 31 est une représentation de données d'une carte numérique (32) stockée dans une mémoire 32 d'une base de données 320 contenant diverses mémoires 32, 33 et 35 à 38 du système de calcul ou calculateur 30, dont les moyens de traitement de calcul, ou unité centrale, de mémorisation, de saisie et de présentation de données, par un clavier et/ou un écran d'affichage interactif avec souris ou autre, n'ont pas été représentés en détail. La carte numérique (32) spécifie les reliefs naturels et artificiels, ainsi que leur nature, telle que forêt, immeubles et autres, ce qui permet de calculer une estimation de l'atténuation radio de liaisons affectées par les reliefs.

L'opérateur du réseau à implanter dispose d'une plage de fréquences et y a défini, et mémorisé dans le calculateur 30, une pluralité de valeurs de fréquences de porteuses constituant des canaux de transmission, numériques dans cet exemple, tels que ceux du réseau GSM ou UMTS, qui ont respectivement été affectées aux stations 11 à 14. Les valeurs des fréquences affectées ont été mémorisées dans la base de données 320, en association avec les stations concernées.

Comme l'illustrent les flèches 41 et 42, un terminal radio mobile 21 situé dans la zone de bord avec recouvrement 120 peut recevoir les émissions de plusieurs stations, ici les deux stations 11 et 12 dans l'exemple du dessin. Parmi les deux signaux reçus, ou plus, le signal de niveau le plus élevé est considéré comme étant le signal utile, par exemple celui de la station 11, et l'autre, provenant donc de la station 12, est un signal parasite, qui peut toutefois devenir le signal utile si les conditions de propagation radio inversent l'inégalité des niveaux. Accessoirement, il est en outre prévu une gestion avec hystérésis de niveau pour limiter le nombre des commutations de gestion (hand-over en anglais) de la mobilité des terminaux 21 entre cellules 1 à 4. Ainsi, un signal de plus fort niveau perdant sa primauté de niveau reste toutefois considéré comme étant le signal utile tant que l'écart avec le signal devenu le plus fort ne dépasse pas une valeur déterminée. Ainsi, d'une façon générale, les limites des cellules 1 à 4 fluctuent avec les conditions de propagation radio.

Un bilan de la liaison radio correspondante peut être estimé d'après les positions relatives des stations 11 à 14 par rapport à la position de terminal mobile 21 qui a été choisie par le calculateur 30, comme position du terminal mobile 21, c'est-à-dire un calcul de l'atténuation de transmission. Cette atténuation dépend en particulier de la distance entre l'émetteur considéré et le terminal récepteur 21 et peut facilement être calculée pour une propagation en espace libre dans l'air, à partir d'une valeur d'atténuation linéique qui vaut environ 20 dB/km pour la plage de fréquences considérée et pour les 500 premiers mètres, et 30 dB/km au-delà, ou même 40 dB/km en milieu urbain. Le cas échéant, en cas d'obstacles radio, les renseignements sur la nature des reliefs fournis par la base de données 32 permettent d'estimer le bilan de liaison sur une trajectoire de propagation déterminée.

La carte 31 est maillée en une pluralité de mailles ou pixels adjacents 34, représentant chacun ici un carré de 5 mètres de côté, la cellule 1 comportant N1 mailles. La carte renseignée 31 permet donc au calculateur 30 de calculer un niveau prévisionnel de réception S1m des signaux des stations 11 à 14 en tout point ou pixel 34, si l'on a préalablement fixé leur niveau d'émission, et il peut alors mémoriser la pluralité de niveaux de réception prévisionnels, associés à la pluralité de pixels 34, dans une mémoire 38 de la base de données 320.

La référence 30 représente, de façon générale, un ensemble de traitement de données dont l'unité centrale a accès aux données nécessaires, contenues dans la base de données 320 (données (32) de carte géographique, lois d'atténuation et autres), ces données ayant été mémorisées dans des mémoires internes au calculateur 30 lui-même ou étant disponibles dans des mémoires externes, par exemple des bases de données accessibles à travers un réseau de transmission de données.

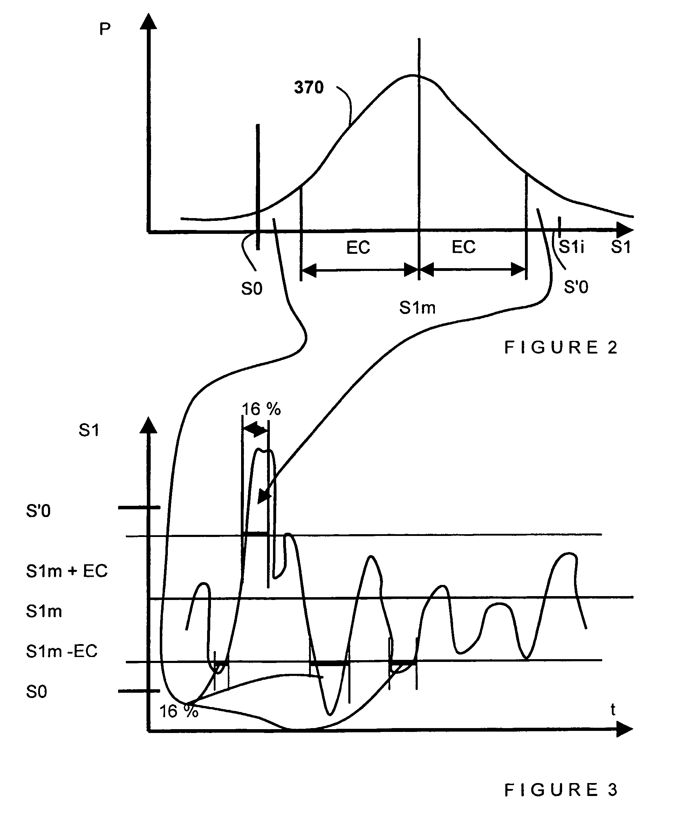

Ayant choisi a priori les positions des stations 11 à 14 et leurs puissances d'émission, le tout mis en mémoire 35, ainsi que la loi d'atténuation de propagation radio, mise en mémoire 33, et les données correspondantes étant accessibles au calculateur 30, ce dernier peut ainsi déterminer le niveau de réception S1m des signaux de la station 11 en tout point ou pixel 34 de la carte 31, dans la cellule 1, par exemple. Le niveau S1m est en fait un niveau moyen de réception, comme expliqué plus loin. Le calculateur 30 dispose aussi, dans une mémoire 36, d'une valeur de seuil de sensibilité de réception S0 du terminal 21, c'est-à-dire du niveau minimal pour lequel le taux de bits erronés atteint un maximum admissible. Le calculateur 30 peut ainsi déterminer l'écart du niveau de réception S1m (niveau d'émission de la station 11 diminué de la valeur du bilan de liaison) par rapport au seuil de sensibilité S0 (fig. 2).

Si l'écart S1m - S0 est positif, la réception sera assurée une majorité du temps et, sinon, elle ne sera au mieux qu'occasionnelle.

Comme évoqué au début, la propagation radio est tributaire d'aléas qui modulent le bilan de liaison au cours du temps t. Ainsi, un obstacle mobile peut s'interposer sur le trajet des ondes, et les atténuer, ou au contraire produire une réflexion renforçant le signal reçu par le terminal 21, en « éclairant » par exemple une zone d'ombre radio. De telles fluctuations ont été étudiées et leurs caractéristiques statistiques ont été déterminées.

La figure 2 représente une gaussienne illustrant une loi 370 de fluctuation statistique du niveau de réception radio. La gaussienne représente les diverses probabilités P respectivement associées à divers niveaux de réception S1i, portés en abscisse S1, qui s'écartent du niveau moyen S1m. En pratique, il a été observé qu'il s'agissait d'une loi log-normale. A titre indicatif, la somme des probabilités associées aux niveaux s'écartant de plus de 1 écart-type, EC, d'un côté vaut environ 16%. En d'autres termes, la probabilité est de 100 - 2 x 16 = 68 % pour qu'un niveau instantané ne soit pas écarté de plus de 1 écart-type EC par rapport à la valeur moyenne S1m calculée par le bilan de liaison, sensiblement la plus probable. On notera toutefois que l'invention n'est pas limitée à cette loi particulière, susceptible d'être modifiée par des conditions particulières, par exemple des passages répétés de mobiles perturbateurs, obstacles ou réflecteurs. D'une façon générale, il suffit que le calculateur 30 dispose en mémoire 37 de la loi de variation ou fluctuation statistique 370 pour déterminer, d'après le niveau de réception moyen S1m, la probabilité pour qu'un niveau instantané S1i soit d'un côté ou de l'autre du seuil de sensibilité S0. La courbe de la figure 2 représente donc la forme de gaussienne de la loi 370 considérée, forme qui est normée par le niveau de réception moyen calculé S1m.

Sur la figure 2, on a reporté le seuil de sensibilité S0 du terminal 21, de valeur fixe, et on a (fictivement) fait glisser la gaussienne selon l'axe des abscisses, pour positionner l'abscisse S1m de son sommet au niveau déterminé d'après le bilan de liaison du point considéré dans la cellule 1. La gaussienne 370 est ainsi coupée en deux parties, inférieure et supérieure, qui représentent chacune la probabilité pour que le signal instantané soit inférieur, respectivement supérieur, au seuil de sensibilité S0. Ainsi, si le niveau moyen reçu S1m (sommet de la gaussienne) est, comme ici, supérieur d'au moins 1 écart-type EC au seuil S0, la probabilité de couverture radio est d'au moins 84 %, c'est-à-dire que le risque d'un évanouissement partiel d'amplitude négative dépassant 1 écart-type EC est inférieur à 16 % à tout instant quelconque. Comme le montre la concavité, tournée vers le haut, de la branche inférieure de la gaussienne, la probabilité de non-couverture décroît rapidement au-delà de 1 écart-type EC.

Il est aussi représenté le cas opposé, pour lequel le niveau moyen S1m est supposé être inférieur au seuil de sensibilité du terminal 21, alors référencé S'0. Pour la commodité du dessin, on a en fait laissé fixe le niveau moyen S1m et on a remonté le seuil S0 jusqu'au niveau S'0. Ces deux cas d'inégalité entre le niveau moyen S1m et le seuil S0 ou S'0 sont illustrés par la figure 3.

La figure 3 est un exemple de fluctuations du niveau reçu S1. Comme le suggèrent, très schématiquement, les deux flèches partant respectivement des deux zones de gaussienne situées hors du "coeur" de la gaussienne, allant de S1m - EC à S1m + EC dans la figure 2, le signal S1 reste statistiquement 16 % du temps t au-dessous du niveau S1m — EC et 16 % du temps au-dessus de S1m + EC. On voit donc que, pour un signal moyen reçu S1m supérieur au seuil S0 d'au moins 1 écart-type EC, la probabilité, pour qu'une impulsion parasite négative abaisse le signal reçu instantané sous le seuil S0, est inférieure à 16 %. Symétriquement, si le niveau moyen reçu S1m est inférieur au seuil S'0 d'au moins 1 écart-type EC, la probabilité, pour qu'une impulsion parasite positive translate le signal reçu instantané au-dessous du seuil S'0, est inférieure à 16 %. Comme expliqué plus haut, on a, pour la facilité du dessin, supposé deux niveaux de seuil S0, S'0 en laissant inchangé le niveau moyen reçu S1m, alors qu'en fait c'est ce dernier qui varie avec l'atténuation, le seuil de sensibilité S0, S'0 étant fixe.

Un exposé détaillé des calculs de probabilité de couverture radio selon la marge de sécurité du niveau moyen de réception S1m se trouve dans l'article « Microwave Mobile Communication », de Jakes Jr, John Wiley & Sons, New-York, 1974.

Le calculateur 30 détermine ainsi, pour chacun de la pluralité N1 d'une matrice de points ou pixels 34 de la carte 31 représentant toute la cellule 1, le niveau moyen S1m de réception des signaux de la station 11 et les fluctuations du niveau moyen S1m d'après la loi de variation statistique de la mémoire 37, d'où il détermine, par comparaison avec le seuil de sensibilité S0, la probabilité pour que le niveau instantané S1 soit d'un côté, déterminé, du seuil S0. Au-dessus de ce dernier, à un instant quelconque, il y a couverture radio à l'instant considéré, et, au-dessous, le service radio n'est pas assuré.

Comme déjà indiqué, le cas particulier d'égalité, très ponctuel, n'a pas de signification spécifique et peut être rattaché à l'un ou l'autre des deux cas principaux.

Ainsi, selon le procédé de l'invention, d'établissement d'une carte de couverture radio d'une cellule 1 du réseau de radiotéléphonie cellulaire, au moyen du calculateur 30 disposant des données (32) préalablement mémorisées définissant la carte géographique 31 comportant la position de la cellule 1 et d'une station radio de base associée 11, disposant des données (35, 36) préalablement mémorisées spécifiant le niveau d'émission de la station 11 et le niveau de seuil de sensibilité de réception radio S0 de terminaux 21 de la cellule 1, et disposant des données préalablement mémorisées d'une loi d'atténuation de propagation radio (33),

- le calculateur 30 effectue, à partir des données de carte (32), un maillage de la carte 31 de la cellule 1 en la pluralité déterminée N1 de pixels 34 de la carte 31 occupant des positions dont il mémorise des données représentatives,
- il calcule, par comparaison entre les données de carte (32), spécifiant la position de la station 11, et les données de position de chaque pixel 34 et d'après la loi d'atténuation (33), une pluralité N1 d'atténuations de propagation radio du niveau d'émission (35) de la station 11 pour les pixels respectifs 34, d'où il déduit, à partir du niveau d'émission (35) de la station 11, une pluralité de niveaux moyens de réception S1m, associés aux pixels 34 respectifs, niveaux S1m qu'il mémorise en mémoire 38, et
- il compare la pluralité de niveaux moyens de réception mémorisés S1m au seuil de sensibilité S0 des terminaux 21 pour déterminer une pluralité N1 de sens d'inégalité entre la valeur du seuil S0 et la valeur du niveau moyen de réception S1m associé à chaque pixel 34, et en déduire la carte de couverture radio de la cellule 1.

En outre,

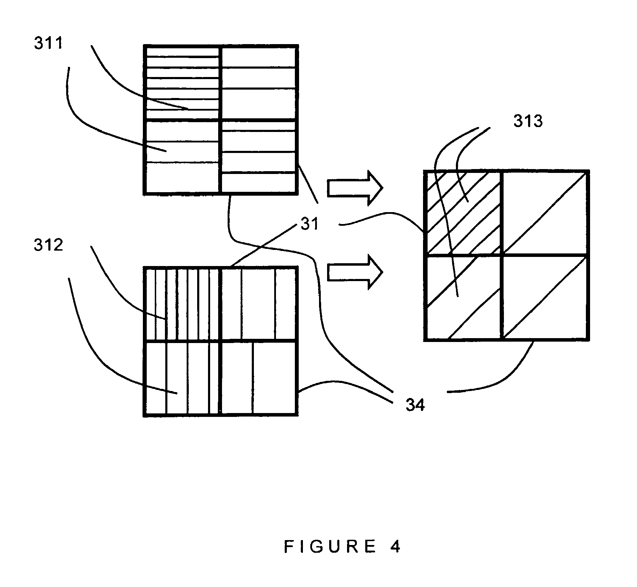

- des données (37) représentant une loi de fluctuation temporelle de l'atténuation de propagation radio ayant été préalablement mémorisées et rendues accessibles au calculateur 30, ce dernier applique la loi de fluctuation à la pluralité N1 de niveaux moyens de réception S1m,
- il en détermine une pluralité correspondante N1 de probabilités P (311, fig. 4) pour que lesdites inégalités respectives aient un sens déterminé, et
- il établit la carte de couverture radio en associant, à chaque pixel 34, des données représentant ladite probabilité P (311).

On notera que l'appellation « carte de couverture radio » désigne fondamentalement des données 311 indiquant la probabilité de couverture radio de chaque pixel 34. Ces données peuvent, si on le souhaite, être représentées sous la forme d'une carte, et/ou être exploitées numériquement pour calculer un taux moyen de couverture dans la cellule 1, par sommation des taux de couvertures ponctuels des pixels respectifs 34, le résultat étant normé par division par N1. On remarquera en outre que les calculs ci-dessus de niveau absolu reçu S1 sont équivalents à des calculs de niveau relatif. En d'autres termes, le niveau de sensibilité S0 pourrait être défini par son écart (atténuation maximale tolérable) par rapport au niveau d'émission de la station 11.

Des calculs classiques, à partir d'une formule présentée par Jakes pour relier la probabilité ponctuelle, de couverture en bordure, à la probabilité intégrée globale dans la cellule 1, montrent que, si l'écart-type EC est par exemple de 10 (ou 8) dB, et si l'on considère que la limite de la cellule 1 est définie par un taux de couverture de 50 % (S1m = S0), la probabilité de couverture de la cellule 1 (supposée homogène en propagation radio) est de 75 (ou 78) %. Inversement, si l'on part d'un taux de couverture radio global moyen visé, par exemple 95 % dans la cellule 1, il faut alors limiter sa taille, ou augmenter la puissance de la station 11, pour que la probabilité de couverture en limite de cellule 1 atteigne 85 (ou 80) %. La comparaison des deux exemples ci-dessus montre qu'un écart type EC réduit est favorable, en ce sens qu'une probabilité de 80 % en bordure suffit pour satisfaire à l'objectif global moyen de 95 %. Dans le cas de l'écart-type EC de 10 dB, la valeur de probabilité de 85 % en bordure conduit à y prévoir une marge (S1m — S0) de 11, 3 dB.

On notera que le seuil S0 peut varier avec le service radio offert, en particulier un débit accru peut remonter ce seuil. Par exemple, dans le système de troisième génération UMTS, pour des paquets à un débit moyen utile de 384 kb/s, un niveau en bordure S1m de —86 dBm a été retenu, incluant une marge de 12 dB. Le seuil S0 est donc de —98 dBm.

Le procédé ci-dessus est naturellement applicable aux autres cellules 2 à 4, de façon mutuellement indépendante. Toutefois, en plus, il est ici prévu une amélioration des résultats du procédé, consistant à prendre en compte un effet de bord, c'est-à-dire le fait qu'il y a une entraide entre stations 11 à 14. En effet, si l'on suppose que le terminal 21 est situé dans la zone de bord 120 de la cellule 1 recouverte par, ou simplement voisine de, une zone de bord d'une cellule adjacente 2, il existe une probabilité pour qu'un niveau instantané S2 de réception des signaux de la station 12 par le terminal 21 soit supérieur au seuil S0. Le terminal 21 pourra alors se rattacher à la station 12 si sa liaison avec la station 11 présente un affaiblissement excessif. On conçoit cependant que la probabilité du secours est limitée, sinon faible, puisqu'il s'agit de liaisons sensiblement en limite de portée radio, donc avec un sommet de gaussienne dont la position du niveau associé de réception moyen S1m, relativement proche du seuil S0, n'offre pas qu'une faible marge de sécurité.

En pareil cas, la probabilité composite Pc de couverture radio du pixel 34 considéré est égale à

$$Pc = A + B - A.B,$$

c'est-à-dire la somme des deux probabilités de couverture du pixel 34 considéré, A et B (fig. 1), associées aux stations respectives 11 et 12, diminuée de la valeur du produit A.B représentant le fait que l'une des deux probabilités B (ou A) est inutile lorsque l'autre probabilité A (ou B) est effective, c'est-à-dire lorsque la liaison avec la station 11 (ou 12) fonctionne. A titre d'illustration, sur la figure 1, le pixel 34 repéré précisément par la référence 120 comporte un côté représenté renforcé en noir, intérieurement au pixel, sur toute sa longueur par une barre horizontale dont l'épaisseur est proportionnelle à la probabilité A, et, de même, un côté adjacent perpendiculaire renforcé en noir, intérieurement au pixel, sur toute sa longueur par une barre verticale dont l'épaisseur est proportionnelle à la probabilité B. La probabilité composite Pc est représentée par la surface totale noircie, qui est donc la somme des deux surfaces de trait épais, moins leur surface de recouvrement.

On peut prendre en compte encore d'autres stations voisines 13, 14 pour remonter la valeur calculée du taux de couverture du pixel de zone de bord.

Ainsi, au moins une autre cellule radio 2, 3, 4, avec station de base 12, 13, 14, occupant une position lui permettant de recouvrir une zone de bord 120, 130, 140 de la cellule considérée 1, le calculateur 30 détermine aussi la carte de couverture de chaque autre cellule 2, 3, 4 et il affecte, aux pixels 34 de la zone de bord respective 120, 130 et 140, la probabilité composite Pc d'inégalité représentant la composition de la probabilité associée à l'émission de la station 11 de la cellule considérée 1 et une probabilité homologue associée à la station 12, 13, 14 de l'autre cellule 2, 3, 4.

La figure 4 illustre un autre complément du procédé de l'invention, permettant de fournir un taux de couverture de la population prévue de terminaux 21 dans la cellule 1 considérée. La référence 311 sur la carte 31 représente les N1 diverses probabilités de couverture des pixels 34 respectifs, c'est-à-dire la carte géographique de couverture radio, ici restreinte à quatre pixels 34 pour la clarté de l'exposé. La référence 312, sur la même carte 31, à nouveau représentée, désigne les N1 diverses densités prévues de terminaux 21, ou encore la densité de population, éventuellement modulée pour tenir compte du taux d'équipement en terminaux 21 dans la région de la cellule 1 considérée. La référence 313 représente, encore sur la carte 31, les N1 divers produits de la densité statistique ou probabilité de couverture radio locale 311 par la densité 312 des terminaux 21 dans le pixel 34 considéré. Dans le calculateur 30, chaque pixel 34 est associé à une information, représentée ici par des rayures plus ou moins serrées, ou couleur, niveau de gris, rayures ou autres, représentant le produit résultant de densité composite. Cette densité composite peut être exprimée par un nombre exprimant effectivement une densité relative entre pixels 34 ou par un nombre absolu si les pixels 34 sont de différentes tailles. On aura compris que les données correspondantes de carte 312 sont accessibles au calculateur 30, y ayant de préférence été préalablement stockées, et que ce dernier effectue les calculs voulus de multiplication ou pondération pour chaque pixel 34 et ensuite, le cas échéant, d'intégration des N1 résultats de la carte 313 pour fournir une valeur intégrée de couverture prévisionnelle de la population estimée des utilisateurs, donc des terminaux 21.

Ainsi, la carte 31 comportant des données (312) de densité de population, le calculateur 30 en détermine la densité de population de chaque pixel 34 et il pondère le taux de couverture radio des pixels 34 par leur densité de population respective, pour obtenir la carte 313 de couverture radio de la population.

Le lecteur comprendra aisément que le procédé de l'invention s'applique tout aussi bien à un ensemble de cellules d'une zone donnée (cette zone étant définie par un contour fictif [arbitraire ou simplement commercial, administratif, etc., contour d'un département par exemple]).

Il doit être évident, pour les personnes versées dans l'art, que la présente invention permet des modes de réalisation sous de nombreuses autres formes spécifiques sans sortir du domaine d'application de l'invention comme revendiqué. Par conséquent, les présents modes de réalisation doivent être considérés à titre d'illustration mais peuvent être modifiés dans le domaine défini par la portée des revendications jointes.

**Revendications**

1. Procédé d'établissement d'une carte de couverture radio d'au moins une cellule (1) d'un réseau de radiotéléphonie cellulaire, au moyen d'un système de calcul (30) disposant de données (32) préalablement mémorisées de carte géographique (31) comportant la position de la cellule (1) et d'une station radio de base associée (11), disposant de données préalablement mémorisées spécifiant un niveau d'émission (35) de la station (11) et un niveau de seuil de sensibilité (36) de réception radio (S0) de terminaux (21) de la cellule (1), et disposant de données préalablement mémorisées d'une loi d'atténuation de propagation radio (33), procédé dans lequel :

   - le système de calcul (30) effectue, à partir des données de carte (32), un maillage de la carte (31) de la cellule (1) en une pluralité déterminée (N1) de pixels (34) de la carte (31) occupant des positions dont il mémorise des données représentatives,
   - il calcule, par comparaison entre les données de carte (32), spécifiant la position de la station (11), et les données de position de chaque pixel (34) et d'après la loi d'atténuation (33), une pluralité (N1) d'atténuations de propagation radio du niveau d'émission (35) de la station (11) pour les pixels respectifs (34), d'où il déduit, à partir du niveau d'émission (35) de la station (11), une pluralité de niveaux moyens de réception (S1 m), associés aux pixels (34) respectifs, qu'il mémorise (38),

- il compare la pluralité de niveaux moyens de réception (S1m) mémorisés au seuil de sensibilité (S0) pour déterminer une pluralité de sens d'inégalité entre la valeur du seuil (S0) et la valeur du niveau moyen de réception (S1m) associé à chaque pixel (34), et en déduire la carte de couverture radio de la cellule (1),

- des données (37) représentant une loi de fluctuation temporelle (370) de l'atténuation de propagation radio ayant été rendues accessibles au système de calcul (30), ce dernier applique la loi de fluctuation (370) à la pluralité (N 1) de niveaux moyens de réception (S1m),

- il en détermine une pluralité correspondante (N1) de probabilités (P, 311) pour que lesdites inégalités respectives aient un sens déterminé, et

- il établit la carte de couverture radio en associant, à chaque pixel (34), des données représentant ladite probabilité (P, 311).

**2.** Procédé selon la revendication 1, dans lequel, au moins une autre cellule radio (2, 3, 4), avec une autre station de base (12, 13, 14), occupant une position lui permettant de recouvrir une zone de bord (120, 130, 140) de la cellule considérée (1), le système de calcul (30) détermine aussi la carte de couverture de chaque autre cellule (2, 3, 4) et il affecte, aux pixels (34) de la zone de bord respective (120, 130, 140), une probabilité composite d'inégalité (Pc) représentant la composition de la probabilité (A) associée à l'émission de la station (11) de la cellule considérée (1) et une probabilité homologue (B) associée à l'émission de l'autre station (12, 13, 14).

**3.** Procédé selon l'une des revendications 1 et 2, dans lequel, la carte (31) comportant des données de densité de population, le système de calcul (30) en détermine la densité de population (312) de chaque pixel (34) et il la pondère (313) par la probabilité associée à chaque pixel (34).

**4.** Procédé selon l'une des revendications 1 à 3, dans lequel le système de calcul (30) calcule la somme des probabilités (P, 311, 313) de la pluralité de pixels (34) pour déterminer un taux moyen de couverture radio de la cellule (1).

**5.** Procédé selon la revendication 4, dans lequel le calcul porte sur la somme des probabilités pondérées.

**Claims**

**1.** Method of establishing a radio coverage map for at least one cell (1) of a cellular mobile telephone network, by means of a calculation system (30) using previously memorised data (32) from a geographic map (31) including the position of the cell (1) and of an associated radio base station (11), using previously memorised data specifying a transmission level (35) of the station and a sensitivity threshold level (36) for radio reception (S0) for terminals (21) in the cell (1), and using previously memorised data for a radio propagation attenuation law (33), wherein:

- the calculation system produces, on the basis of the map data (32), a grid of the map (31) of the cell (1) with a defined number (N1) of pixels (34) on the map (31) occupying positions of which it memorises the representative data,

- by comparison between the map data (32) specifying the position of the station (11) and the position data for each pixel (34) and according to the attenuation law (33), the calculation system calculates a plurality (N1) of attenuations of radio propagation for the transmission level (35) of the station (11) for the respective pixels (34), from which it deduces, on the basis of the transmission level (35) of the station (11), a plurality of average reception levels (S1m) associated with the respective pixels (34) which it memorises (38),

- it compares the memorised plurality of average reception levels (S1m) with the sensitivity threshold (S0) in order to determine a plurality of directions of disparity between the threshold value (S0) and the value of the average reception level (S1m) associated with each pixel (34), and to deduce from this the radio coverage map of the cell (1),

- as data (37) representing a temporal fluctuation law (370) for the attenuation of radio propagation have been made accessible to the calculation system (30), this latter applies the fluctuation law (370) to the plurality (N1) of average reception levels (S1m),

- it determines therefrom a corresponding plurality (N1) of probabilities (P, 311) so that the said respective disparities have a defined direction, and

- it establishes a radio coverage map by associating with each pixel (34) data representing the said probability (P, 311).

**2.** Method as claimed in Claim 1, wherein at least one other radio cell (2, 3, 4) with another base station (12, 13, 14) occupies a position which enables it to cover a border zone 120, 130, 140) of the cell in question (1), and the calculation system (30) also determines the coverage map of each other cell (2, 3, 4) and assigns to the pixels (34) of the respective border zone (120, 130, 140) a composite disparity probability (Pc) representing the composition of the probability (A) associated with transmission from the station (11) of the cell in question (1) and an equivalent probability (B) associated with the transmission from the other station (12, 13, 14).

**3.** Method as claimed in any one of Claims 1 and 2, wherein the map (31) includes population density data, and the calculation system (30) determines therefrom the population density (312) of each pixel (34) and weights it (313) by the probability associated with each pixel (34).

**4.** Method as claimed in any one of Claims 1 to 3, wherein the calculation system (30) calculates the sum of the probabilities (P, 311, 313) for the plurality of pixels (34) in order to determine an average radio coverage rate for the cell (1).

**5.** Method as claimed in Claim 4, wherein the calculation relates to the sum of the weighted probabilities.

**Patentansprüche**

**1.** Verfahren zum Erstellen einer Funkabdeckungskarte mindestens einer Zelle (1) eines zellulären Funktelefonnetzwerks mittels eines Rechensystems (30), das zuvor gespeicherte Daten (32) einer geographischen Karte (31) aufweist, die die Position der Zelle (1) und einer verknüpften Funkbasisstation (11) aufweist, das zuvor gespeicherte Daten aufweist, die einen Sendepegel (35) der Station (11) und eine Höhe einer Sensibilitätsschwelle (36) für den Funkempfang (S0) von Endgeräten (21) der Zelle (1) spezifizieren, und das zuvor gespeicherte Daten eines Gesetzes für die Funkausbreitungsdämpfung (33) aufweist, wobei in dem Verfahren:

- das Rechensystem (30) ausgehend von den Kartendaten (32) eine Vernetzung der Karte (31) der Zelle (1) in eine bestimmte Mehrzahl (N1) von Pixeln (34) der Karte (31) durchführt, die Positionen besetzen, deren repräsentative Daten es speichert,
- es mittels Vergleichens zwischen den Kartendaten (32), die die Position der Station (11) spezifizieren, und den Positionsdaten von jedem Pixel (34) und gemäß dem Dämpfungsgesetz (33) eine Mehrzahl (N1) von Funkdämpfungen des Sendepegels (35) der Station (11) für die jeweiligen Pixel (34) berechnet, wovon es ausgehend von dem Sendepegel (35) der Station (11) eine Mehrzahl von mittleren Empfangspegeln (S1m) ableitet, die mit den jeweiligen Pixeln (34) verknüpft sind, die es speichert (38),
- es die Mehrzahl von gespeicherten mittleren Empfangspegeln (S1m) mit der Empfindlichkeitsschwelle (S0) vergleicht, zum Bestimmen einer Mehrzahl von Ungleichungsrichtungen zwischen dem Wert der Schwelle (S0) und dem Wert des mittleren Empfangspegels (S1m), der mit jedem Pixel (34) verknüpft ist, und daraus Ableiten der Funkabdeckkungskarte der Zelle (1),
- wobei, nachdem Daten (37) dem Rechensystem (30) zugänglich gemacht wurden, die ein Gesetz der zeitlichen Schwankung (370) der Dämpfung der Funkausbreitung darstellen, letzteres das Schwankungsgesetz (370) auf die Mehrzahl (N1) von mittleren Empfangspegeln (S1m) anwendet,
- es daraus eine entsprechende Mehrzahl (N1) von Wahrscheinlichkeiten (P, 311) bestimmt, so dass die jeweiligen Ungleichungen eine bestimmte Richtung aufweisen, und
- es daraus die Funkabdeckungskarte erstellt, wobei es mit jedem Pixel (34) Daten verknüpft, die die Wahrscheinlichkeit (P, 311) repräsentieren.

**2.** Verfahren gemäß Anspruch 1, wobei, wenn mindestens eine andere Funkzelle (2, 3, 4) mit einer anderen Basisstation (12, 13, 14) eine Position besetzt, die ihr das Abdecken einer Randzone (120, 130, 140) der betreffenden Zelle (1) ermöglicht, das Rechensystem (30) auch die Abdeckungskarte jeder anderen Zelle (2, 3, 4) bestimmt und den Pixeln (34) der jeweiligen Randzone (120, 130, 140) eine zusammengesetzte Ungleichungswahrscheinlichkeit (Pc) zuordnet, die die Zusammensetzung der Wahrscheinlichkeit (A), die mit dem Senden von der Station (11) der betreffenden Zelle (1) verknüpft ist, und einer entsprechenden Wahrscheinlichkeit (B), die mit dem Senden von der anderen Station (12, 13, 14) verknüpft ist, repräsentiert.

**3.** Verfahren gemäß einem der Ansprüche 1 und 2, wobei, wenn die Karte (31) Daten über die Bevölkerungsdichte aufweist, das Rechensystem (30) daraus die Bevölkerungsdichte (312) für jedes Pixel (34) berechnet und diese mit der Wahrscheinlichkeit (313) gewichtet, die mit jedem Pixel (34) verknüpft ist.

**4.** Verfahren gemäß einem der Ansprüche 1 bis 3, wobei das Rechensystem (30) die Summe der Wahrscheinlichkeiten (P, 311, 313) der Mehrzahl von Pixeln (34) berechnet, um eine mittlere Funkabdek-

kungsrate für die Zelle (1) zu bestimmen.

5. Verfahren gemäß Anspruch 4, wobei die Berechnung die Summe der gewichteten Wahrscheinlichkeiten betrifft.

FIGURE 1

F I G U R E 2

F I G U R E 3

311

312

31

313

34

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0106349 A